Europäisches Patentamt

European Patent Office

Office européen des brevets

(11) Publication number: **0 081 077**
**B1**

# EUROPEAN PATENT SPECIFICATION

(45) Date of publication of patent specification: **04.09.85**

(51) Int. Cl.⁴: **A 23 L 1/16,** A 23 L 1/04

(21) Application number: **82109978.5**

(22) Date of filing: **28.10.82**

(54) **Rice pasta composition.**

(30) Priority: **07.12.81 US 327913**

(43) Date of publication of application:
**15.06.83 Bulletin 83/24**

(45) Publication of the grant of the patent:
**04.09.85 Bulletin 85/36**

(84) Designated Contracting States:
**CH DE FR IT LI NL**

(56) References cited:
**CH-A- 480 023**
**FR-A-2 365 966**

**Patent Abstracts of Japan vol. 5, no. 41, 18 March 1981**

(73) Proprietor: **SOCIETE DES PRODUITS NESTLE S.A.**
**Case postale 353**
**CH-1800 Vevey (CH)**

(72) Inventor: **Hsu, Jau Yann**
**21, Flax Hill Road**
**Brookfield Connecticut 06804 (US)**

Courier Press, Leamington Spa, England.

## Maschinenbauteil aus oxidkeramischen Werkstoffkomponenten

Die vorliegende Erfindung betrifft ein Maschinenbauteil aus oxidkeramischen Werkstoffkomponenten, das abdichtend wirkt und in reibendem Eingriff steht, wie z. B. Gleitring für axiale Gleitlagerdichtungen oder Ventilscheibe für Mischventile, insbesondere Ventilscheibe für sanitäre Mischbatterien.

Maschinenbauteile aus oxidkeramischen Werkstoffen wie z. B. Ventilscheiben, die in vorzugsweise aus zwei solcher Ventilscheiben bestehenden Steuerelementen verwendet werden, wie sie in Mischventilen, insbesondere aber in Mischbatterien des Sanitärbereiches zur Regulierung von Flüssigkeitsströmen eingebaut werden, sind bekannt. In der DE-B-12 82 377 ist z. B. ein keramischer Ventilsitz beschrieben, der aus 85-99 Gew.% Aluminiumoxid und 1-4 Gew.% Talk besteht. In bevorzugter Ausführung enthält ein solcher Ventilsitz 6 Gew.% Kaolin bei entsprechender Reduzierung des Aluminiumoxidanteils.

Aus der FR-A-14 54 755 ist die Herstellung solcher Ventilteile auch aus Mischungen bekannt, die neben 35 bis 70 Gew.% Zirkonoxid noch 7 bis 30 Gew.% Calzium- und Zirkonsilikat, 0 bis 30 Gew.% Magnesium- und Zirkonsilikat, 0 bis 25 Gew.% Töpferton und 0 bis 25 Gew.% Kaolin enthalten. Der Vorteil dieser bekannten keramischen Ventilscheiben liegt in der verbesserten Abriebbeständigkeit und der größeren Beständigkeit gegen Erosion und Korrosion gegenüber aus Hartmetallen hergestellten Ventilteilen. Ein weiterer Vorschlag, wie er in der DE-B-12 91 957 enthalten ist, geht dahin, die Abdichtwirkung von Ventilscheiben aus 95 bis 100 Gew.% Aluminiumoxid, 0 bis 3 Gew.% Talk und 0 bis 3 Gew.% Kaolin dadurch zu verbessern, daß die miteinander in Eingriff stehenden Seiten der Ventilscheiben so geläppt und poliert werden, daß sie eine Ebenheit von 3 Lichtbanden und eine Oberflächenbeschaffenheit mit einem quadratischen Mittelwert (geometrischer Mittenrauhwert) < 10 aufweisen.

Neben diesen, die Qualität eines keramischen Maschinenbauteils wie Ventildichtscheiben und Gleitringe kennzeichnenden Bezugsgrößen werden die bis jetzt bekannten Maschinenbauteile durch die Festlegung des Profiltraganteils beurteilt. Unter dem Profiltraganteil, der in weiten Bereichen der Technik, in denen die Beurteilung der Oberflächengüte eine wichtige Rolle spielt, seit langem bekannt ist, versteht man gemäß DIN 4762 das Verhältnis der tragenden Länge zur Bezugsstrecke. Bei der Herstellung von abdichtenden und in reibendem Eingriff stehenden Maschinenbauteilen war man bisher davon ausgegangen, daß die notwendige Dichtigkeit nur durch einen hohen Profiltraganteil erzielt werden kann. In der Tat weisen die bisher bekannten Ventilscheiben und Gleitringe Traganteile > 70 % auf. Mit der Höhe des Traganteiles nimmt jedoch auch die Kraft zu, die beispielsweise zur Gegeneinanderverschiebung zweier in Eingriff stehender Ventilscheiben erforderlich ist. Bei den bekannten Ventilscheiben ist infolge ihres hohen Profiltraganteils daher auch eine hohe Verschiebekraft notwendig. Um den Nachteil der hohen Verschiebekraft auszugleichen, behilft man sich nach wie vor damit, bei der Montage der Steuerelemente etwas Fett, zumeist auf Silikonbasis, zwischen die Ventilscheiben zu schmieren. Das eingebrachte Fett befindet sich dabei zunächst in sogenannten Schmiertaschen, das sind Vertiefungen auf der Oberfläche der Ventilscheiben. Durch den Einfluß des Wassers ist die Wirkung des Fettes jedoch nicht von Dauer und schließlich nicht mehr vorhanden. Von diesem Moment an muß eine höhere Verschiebekraft aufgewendet werden und es setzt ein erhöhter Verschleiß ein, da im Wasser befindliche Verunreinigungen, wie z. B. Sand, die glatten Oberflächen der flächig aufeinanderliegenden Ventilscheiben mehr und mehr beschädigen.

Der durch die aufzuwendende hohe Verschiebekraft entstehende Nachteil besteht für den Benutzer z. B. einer sanitären Mischarmatur, insbesondere bei älteren Armaturen darin, daß eine feine Regulierung und Mischung von Heiß- und Kaltwasserströmen nicht auf Anhieb möglich ist und die Einstellung deshalb unter Umständen mehrfach korrigiert werden muß.

Man hat auch bereits versucht, den Profiltraganteil der Ventilscheiben durch Schleifen mit gröberem Diamantkorn zu reduzieren. Auch diese Maßnahme brachte noch nicht den gewünschten Erfolg, weil bei einem auf diese Weise erzeugten geringeren Profiltraganteil von z. B. < 40 % die Dichtungswirkung der Steuerelemente nachläßt. Die Nachteile der bisher bekannten Gleitringe liegen darin, daß durch zu hohen Traganteil die Trockenreibung zunimmt und damit Trockenlauftemperature über 300 °C auftreten.

Die Aufgabe der vorliegenden Erfindung ist die Überwindung dieser bestehenden Nachteile. Insbesondere will die Erfindung Maschinenbauteile schaffen, die in reibendem Eingriff stehen und vollkommen abdichtend wirken, die aber trotzdem leicht gegenüber den Maschinenteilen, mit denen sie in Eingriff stehen, verschiebbar sind. Entsprechend der Erfindung hergestellte Ventilscheiben sollen infolge der leichten Verschiebbarkeit der Ventilscheiben eine bessere Dosiermöglichkeit aufweisen, wobei diese Einstellungsfähigkeit auch nach langer Betriebsdauer erhalten bleiben soll. Dafür dürfen andere Eigenschaften wie insbesondere eine gute Thermoschockfestigkeit keinesfalls nachteilig beeinflußt werden. Entsprechend der Erfindung hergestellte Gleitringe sollen eine bessere Notlaufeigenschaft bei gleichzeitig niedrigerer Trockenlauftemperatur besitzen.

Die Lösung der Aufgabe gelingt durch ein aus oxidkeramischen Werkstoffkomponenten hergestelltes Maschinenbauteil, das durch die folgenden Merkmale gekennzeichnet ist :

a) Das Maschinenbauteil enthält 3,0 bis 25 Gew.% Zirkonoxid und/oder Hafniumoxid, die in die übrigen Werkstoffkomponenten in homogener Verteilung eingelagert sind und im Inneren des Maschinenbauteils zu überwiegendem Teil bei Raumtemperatur in metastabiler, tetragonaler Modifikation, and der Oberfläche des Maschinenbauteils jedoch in monokliner Modifikation vorliegen,

temperature is generally from 90°C to 110°C and the cooking time is dependent on the pasta's size and the steam temperature.

The water used in the processes of the present invention may be hard or soft except when sodium or potassium alginate is used in the absence of or in the presence of extremely small amounts of propylene glycol alginate, in which case hard water should be used both for processing and cooking.

In the processes of this invention the uncooked rice flour may be regular rice flour or waxy (glutinous) rice flour, pasta made from the latter being softer than pasta made from the former. Also the firmness of the pasta may be increased by precooking or increasing the amount of propylene glycol alginate. Moreover if a whiter pasta is desired the amount of sodium or potassium alginate should be reduced and the amount of propylene glycol alginate should be increased. The processes of the two embodiments of the present invention are thus very versatile.

The pasta may be extruded into a variety of conventional shapes including all shapes of macaroni and noodle products which comprise all sizes of spaghetti, vermicelli, linguine, ziti, elbow spaghetti, orzo, shell, elbow macaroni, rigatoni, macaroni twist, rings, alphabets, lasagne, spirals, manicotti, noodles and bows.

The following Examples further illustrate the present invention parts and percentages being given by weight.

Example 1

83.2 parts regular rice flour, 15 parts precooked rice flour, 1 part sodium alginate and 0.8 part propylene glycol alginate were premixed until uniform, mixed in regular or hard water (water without a softening treatment) to a total moisture content of 30 to 33%, extruded into noodle shape (1 cm wide, 0.75 cm thick and 5—6 cm long) in a noodle extruder and finally dried at 80—85% humidity and 50°C for 3 hours. The moisture content of the dried rice pasta was 9—10%.

The pasta was then tested for dry pasta strength, relative cooking loss, relative cooked weight and cooked firmness by the following methods:

The dry pasta strength was determined by cutting a single strand pasta in an Instron Universal Testing Instrument. Using a Warner Bratzler meat shear test attachement the peak force required to shear the pasta is recorded ($kg/cm^2$).

The relative cooking loss was determined by boiling 15 g pasta for 8 minutes and drying at 100°C for 4 hours. The dried pasta was weighed and the % loss calculated.

The relative cooked weight was determined by boiling 50 g pasta for 8 minutes and weighing the drained pasta weight (g).

The cooked firmness was determined by boiling 50 g pasta for 8 minutes, weighing out 80 g cooked pasta and recording the peak force required to shear the pasta in an Instron Universal Testing Instrument using a Kramer Shear Test attachment ($kg/cm^2$).

The results were as follows:

| | |
|---|---|
| Dry pasta strength | $3.2 \ kg/cm^2$ |
| Relative cooking loss | 13.7% |
| Relative cooked weight | 114 g |
| Cooked firmness | $43 \ kg/cm^2$ |

Comparative Examples A to D

A process similar to that of Example 1 was carried out by using the quantities of ingredients shown in the following Table I.

TABLE I

| Example | A | B | C | D |
|---|---|---|---|---|
| Regular Rice flour | 100 | 98.2 | 84.2 | 84.0 |
| Precooked rice flour | — | — | 15.0 | 15.0 |
| Sodium alginate | — | 1.0 | — | 1.0 |
| Propylene glycol alginate | — | 0.8 | 0.8 | — |

The dry pasta strength, relative cooking loss, relative cooked weight and cooked firmness were determined by the same methods as used in Example 1.

The dry pasta strength of the pasta of Comparative Example A was only 1.5 kg and that of Example B was only 1.8 kg compared to 3.2 kg of the pasta of Example 1.

The cooking qualities (cooking loss and cooked firmness) of the pastas of Comparative Examples C and D were inferior to those of the pasta of Example 1 as shown in Table II.

In = tragende Länge = helle Länge,
l = Bezugsstrecke.

Zur Auswertung werden je 10 Bezugsstrecken von 0,5 mm Länge herangezogen.

Durch den geringen Traganteil ist die Reibung der mit einem weiteren Maschinenbauteil in Eingriff stehenden erfindungsgemäßen Maschinenbauteile erheblich geringer. Am Beispiel eines Steuerelementes, dessen Ventilscheiben aus erfindungsgemäßen Maschinenbauteilen bestehen, ergibt sich dabei überraschenderweise, daß die Dichtigkeit des Steuerelementes durchaus mit der Dichtigkeit eines Steuerelementes vergleichbar ist, das mit bisher bekannten Ventilscheiben ausgerüstet ist. Durch die vorliegende Erfindung ist damit erstmals die Überwindung des bestehenden Vorurteils gelungen, wonach eine hohe Dichtigkeit eines aus keramischen Ventilscheiben hergestellten Steuerelementes nur dann erzielbar war, wenn die Ventilscheiben eine geringe Rauhigkeit, verbunden mit einem hohen Traganteil aufwiesen.

Ein weiterer, in der neuartigen Mikrostruktur der Oberfläche liegender Vorteil der erfindungsgemäßen Maschinenbauteile besteht darin, daß diese ohne zusätzliches Schmierfett eingesetzt werden können, wobei ihre volle Funktionsfähigkeit auch nach längerer Zeitdauer noch erhalten bleibt.

In einer besonders bevorzugten Ausführungsform enthalten die erfindungsgemäßen Maschinenbauteile 7 bis 16 Gew.% Zirkonoxid.

Der Mittenrauhwert Ra liegt vorzugsweise zwischen 0,1 und 0,03 $\mu$m.

Die erfindungsgemäßen Maschinenbauteile können als weitere oxidkeramische Werkstoffe Aluminiumoxid, Titanoxid und Mullit enthalten, ganz besonders bevorzugt ist davon das Aluminiumoxid, das vorteilhaft zu mindestens 75 Gew.% enthalten ist.

Für das verwendete Aluminiumoxid hat sich eine Teilchengröße von < 5 $\mu$m und für das Zirkonoxid eine Teilchengröße von 0,2 bis 2 $\mu$m als optimal geeignet erwiesen, für die Erzielung der gewünschten Oberflächencharakteristik.

Zugesetzt werden können dem Aluminiumoxid noch geringe Mengen eines Kornwachstumshemmers und Sinterhilfsmittels, wobei besonders eine Zugabemenge von 0,05 bis 0,25 Gew.% Magnesiumoxid geeignet ist.

Rein äußerlich unterscheiden sich die erfindungsgemäßen Maschinenbauteile von den bisher bekannten dadurch, daß die Oberfläche nicht das hochglänzende Aussehen der bisher bekannten Maschinenbauteile aufweist, sondern ein mehr mattglänzendes Aussehen besitzt. Die äußerlich mit bloßem Auge bereits erkennbaren Unterschiede sind auf die unterschiedliche Mikrostruktur der Oberfläche zurückzuführen, wobei ein hoher Profiltraganteil eine hochglänzende Oberfläche ergibt, während ein geringer Traganteil mit einer Vielzahl von Einschnitten — von allerdings sehr geringer Tiefe — den erfindungsgemäßen Maschinenbauteilen ein mattglänzendes Aussehen der Oberfläche verleiht. Diese andersartige Struktur in der Oberfläche ist allerdings nur dann erreichbar, wenn die Oberfläche so bearbeitet wird, daß an der Oberfläche der erfindungsgemäßen Maschinenbauteile tatsächlich eine Umwandlung des eingelagerten Zirkonoxids in die monokline Form stattfindet. Diese Umwandlung der an der Oberfläche oder unmittelbar unterhalb der Oberfläche sich befindenden eingelagerten Zirkonoxidteilchen erfolgt auf Grund der spannungsinduzierten Phasenumwandlung infolge der in diesem Oberflächenbereich bei der Bearbeitung mit Diamantkorn (Schleifen und/oder Läppen) wirksam werdenden hohen mechanisch/thermischen Belastung auf die eingelagerten Zirkonoxidteilchen sowie deren unmittelbare Umgebung.

Im Gegensatz dazu verharren die tiefer im Inneren der Maschinenbauteile befindlichen eingelagerten Zirkonoxidteilchen in der metastabilen tetragonalen Modifikation, da einerseits die durch den Schleif- bzw. Läpp-Prozeß aufgebrachte mechanisch/thermische Belastung in größerer Tiefe stark abnimmt und andererseits das Umklappen dieser tetragonalen Zirkonoxidteilchen in die monokline Modifikation, die unter Volumenzunahme erfolgt, durch die starke allseitige Einbindung der Teilchen (Druckkräfte) in die übrigen Werkstoffkomponenten behindert wird.

Die Figur zeigt ein Maschinenbauteil in Form einer Ventilscheibe in der erfindungsgemäßen Zusammensetzung, ohne daß die Erfindung auf diese Ausführungsform beschränkt ist.

Mit 1 ist die Ventilscheibe bezeichnet. Am Rande weist die Ventilscheibe 1 Ausnehmungen 2 auf. Mit 3 bzw. 3′ sind die Durchlaßöffnungen für die zu mischenden Flüssigkeitsströme und mit 4 der Auslauf des gemischten Flüssigkeitsstromes bezeichnet. Bei 5 ist in schematisierter Form das Innere der Ventilscheibe dargestellt, in dem bei Raumtemperatur das eingelagerte Zirkonoxid in metastabiler, tetragonaler Modifikation vorliegt.

Die nachfolgenden Beispiele verdeutlichen die Erfindung, ohne daß die Erfindung auf die Beispiele beschränkt ist.

Beispiel 1

330 g Zirkonsilikatpulver ($ZrSiO_4$) mit einer mittleren Korngröße von < 5 $\mu$m und 700 g Aluminiumoxidpulver ($Al_2O_3$) mit einer mittleren Korngröße von < 3 $\mu$m werden in einem hochwirksamen Mahlaggregat unter Zusatz von Wasser gemischt und vermahlen, wobei sich eine spezifische Oberfläche der Pulvermischung von ca. 13 m²/g ergab. Unter Zusatz eines wasserlöslichen Bindemittels wird das

4

Example 10

A procedure similar to that described in Example 6 was carried out but instead of regular rice flour, waxy rice flour was used. The finished rice pasta after rehydration was softer than that prepared by the process of Example 6.

Example 11

A procedure similar to that described in Example 6 was carried out except that no precooked rice flour was used and 1.5 part of sodium alginate and 1.5 part of propylene glycol alginate was used. The finished rice pasta after rehydration was acceptable.

**Claims**

1. A composition comprising uncooked rice flour and, based on the weight of the uncooked rice flour, from 0 to 40% by weight of precooked rice flour, from 0.1 to 4% by weight of sodium or potassium alginate or a mixture thereof and from 0.1 to 4% by weight of propylene glycol alginate with the proviso that when the composition contains less than 5% by weight of precooked rice flour, both the alginates should be present in amounts of at least 1% by weight.

2. A process for preparing a rice pasta characterised in that a dry pasta mix containing uncooked rice flour and, based on the weight of uncooked rice flour, from 5 to 40% by weight of precooked rice flour, from 0.1 to 4% by weight of sodium or potassium alginate or a mixture thereof and from 0.1 to 4% by weight of propylene glycol alginate is mixed with an amount of water sufficient to moisten the dry pasta mix and render it extrudable, extruded into a pasta shape, optionally precooked, and finally dried.

3. A process according to claim 2 characterised in that the amount of precooked rice flour used is from 15 to 30% by weight based on the weight of uncooked rice flour.

4. A process according to claim 2 characterised in that the amount of sodium or potassium alginate used is from 0.3 to 1.0% by weight based on the weight of the uncooked rice flour.

5. A process according to claim 2 characterised in that the amount of propylene glycol alginate used is from 0.3 to 1.0% by weight based on the weight of uncooked rice flour.

6. A process for preparing a rice pasta characterised in that a dry pasta mix containing uncooked rice flour and, based on the weight of uncooked rice flour, from 0 to 5% of precooked rice flour, at least 1% by weight of sodium or potassium alginate or a mixture thereof and at least 1% by weight of propylene glycol alginate is mixed with an amount of water sufficient to moisten the dry pasta mix and render it extrudable, extruded into a pasta shape, precooked and finally dried.

7. A process according to claim 6 characterised in that the sodium or potassium alginate or mixture thereof is used in an amount of from 1.5 to 3.0% by weight based on the weight of uncooked rice flour.

8. A process according to claim 6 characterised in that the propylene glycol alginate is used in an amount of from 1.5 to 3.0% by weight based on the weight of uncooked rice flour.

9. A process according to claim 2 or claim 6 characterised in that the calcium content of the sodium or potassium alginate is not more than 3% by weight based on the weight of the alginate.

10. A process according to claim 2 or claim 6 characterised in that the amount of water used is from 28 to 40% by weight based on the weight of the dry pasta mix.

11. A process according to claim 2 or claim 6 characterised in that the precooking is carried out by spraying water onto extruded rice dough and then steaming.

**Revendications**

1. Composition comprenant de la farine de riz non cuite et, sur la base du poids de la farine de riz non cuite, 0 à 40% en poids de farine de riz précuite, 0,1 à 4% en poids d'alginate de sodium ou de potassium ou d'un mélange de ceux-ci et 0,1 à 4% en poids d'alginate de propylène-glycol, à condition que, lorsque la composition contient moins de 5% en poids de farine de riz précuite, les deux alginates soient présents en quantités d'au moins 1% en poids.

2. Procédé pour préparer une pâte de riz, caractérisé en ce qu'un mélange de pâte sec contenant de la farine de riz non cuite et, sur la base du poids de la farine de riz non cuite, 5 à 40% en poids de farine de riz précuite, 0,1 à 4% en poids d'alginate de sodium ou de potassium ou d'un mélange de ceux-ci et 0,1 à 4% en poids d'alginate de propylène-glycol, est mélangé à une quantité d'eau suffisante pour humidifier le mélange de pâte sec et le rendre extrudable, extrudé en forme de pâte, facultativement précuit et finalement déshydraté.

3. Procédé selon la revendication 2, caractérisé en ce que la quantité de farine de riz précuite utilisée est comprise entre 15 et 30% en poids sur la base du poids de la farine de riz non cuite.

4. Procédé selon la revendication 2, caractérisé en ce que la quantité d'alginate de sodium ou de potassium utilisée est comprise entre 0,3 et 1,0% en poids sur la base du poids de la farine de riz non cuite.

5. Procédé selon la revendication 2, caractérisé en ce que la quantité d'alginate de propylène-glycol utilisée est comprise entre 0,3 et 1,0% en poids sur la base du poids de la farine de riz non cuite.

6. Procédé pour préparer une pâte de riz, caractérisé en ce qu'un mélange de pâte sec, contenant de la farine de riz non cuite et, sur la base du poids de la farine de riz non cuite, 0 à 5% de farine de riz précuite, au

c) einen Mittenrauhwert $R_a$ des Maschinenbauteils kleiner als 0,3 $\mu$m.

2. Maschinenbauteil nach Anspruch 1, dadurch gekennzeichnet, daß der Anteil an Zirkonoxid und/oder Hafniumoxid zwischen 7 und 16 Gew.% liegt.

3. Maschinenbauteil nach einem der Ansprüche 1 und 2, dadurch gekennzeichnet, daß das Maschinenbauteil einen Mittenrauhwert $R_a$ aufweist, der zwischen 0,1 und 0,03 $\mu$m liegt.

4. Maschinenbauteil nach einem der Ansprüche 1 bis 3, gekennzeichnet durch einen Aluminiumoxidgehalt von mindestens 75 Gew.%.

## Claims

1. A mechanical component which comprises constituents of ceramic oxide material and which has a sealing action and is in frictional engagement, such as, for example, a slide ring for an axial sliding bearing seal or a valve disc for mixing valves, especially for sanitary mixing assemblies, characterised by the following features :

a) the mechanical component contains from 3.0 to 25 % by weight of zirconium oxide and/or hafnium oxide, which is incorporated in homogeneous distribution in the other material constituents and which is predominantly in metastable, tetragonal modification at room temperature within the mechanical component but is in monoclinic modification on the surface of the mechanical component,

b) a profile bearing ratio of from 10 to 40 % obtained by surface treatment, such as grinding and lapping,

c) a mean roughness value $R_a$ for the mechanical component of less than 0.3 $\mu$m.

2. A mechanical component according to claim 1, characterised in that the proportion of zirconium oxide and/or hafnium oxide is from 7 to 16 % by weight.

3. A mechanical component according to claim 1 or 2, characterised in that it has a mean roughness value $R_a$ of from 0.1 to 0.03 $\mu$m.

4. A mechanical component according to any one of claims 1 to 3, characterised in that it has an aluminium oxide content of at least 75 % by weight.

## Revendications

1. Pièce mécanique en un constituant de matériau céramique oxydé, ayant un effet d'étanchéité et en prise par frottement, comme par exemple une bague de glissement pour une étanchéité axiale de palier lisse, ou un disque obturateur de robinet pour mitigeurs, en particulier des robinetteries mélangeuses sanitaires, caractérisée en ce qu'elle présente les points suivants :

a) la pièce mécanique contient 3,0 à 25 % en poids d'oxyde de zirconium et/ou d'oxyde de hafnium, qui sont intercalés entre les autres constituants du matériau, en une répartition uniforme, et qui, à l'intérieur·de la pièce mécanique, se présentent pour leur plus grande part, à la température ambiante, sous leur forme métastable tétragonale, mais sous leur forme monoclinique sur la surface de la pièce mécanique,

b) une fraction portante de profil, obtenue par un traitement de surface du type rectification ou rodage à la poudre abrasive, de 10 à 40 %,

c) une rugosité moyenne $R_a$ de la pièce mécanique inférieure à 0,3 $\mu$m.

2. Pièce mécanique selon la revendication 1, caractérisée en ce que le pourcentage d'oxyde de zirconium et/ou d'oxyde de hafnium est compris entre 7 et 16 % en poids.

3. Pièce mécanique selon l'une quelconque des revendications 1 ou 2, caractérisée en ce que la pièce mécanique présente une rugosité moyenne $R_a$ comprise entre 0,1 et 0,03 $\mu$m.

4. Pièce mécanique selon l'une quelconque des revendications 1 à 3, caractérisée en ce qu'elle contient une teneur en oxygène d'au moins 75 % en poids.